# EUROPÄISCHE PATENTSCHRIFT

(11) **EP 0 784 965 B1**
(45) Veröffentlichungstag und Bekanntmachung des Hinweises auf die Patenterteilung: **24.10.2001**
(21) Anmeldenummer: 97100065.8
(22) Anmeldetag: 03.01.1997
(51) Int. Cl.: A61C 19/00, G06F 19/00

(54) **In der zahnärztlichen Praxis einsetzbares mobiles Gerät zur Aufnahme und Übermittlung von Daten**
Mobile device for use in dental applications for registering and transmitting data
Dispositif mobile pour pratique dentaire pour l'enregistrement et la transmission de données

(30) Priorität: 18.01.1996 DE 19601718
(43) Veröffentlichungstag der Anmeldung: 23.07.1997
(73) Patentinhaber: Sirona Dental Systems GmbH, 64625 Bensheim (DE)
(72) Erfinder: Saliger, Günter, Dr., 64625 Bensheim (DE)
(74) Vertreter: Sommer, Peter

(56) Entgegenhaltungen:
- EP-A- 0 678 280
- DE-A- 2 914 045
- DE-C- 3 824 209
- DE-U- 9 018 059

## Beschreibung

Die Erfindung betrifft ein in der zahnärztlichen Praxis einsetzbares mobiles Gerät zur Aufnahme und Übermittlung von Daten aus einer zentralen Patientendatenverwaltungsdatei in ein zahnärztliches Diagnose- und/oder Therapiegerät und vice versa.

Mobile Geräte zur Aufnahme und Übermittlung von patientenspezifischen Daten in eine zentrale Patientendatenverwaltungsdatei und vice versa sind bekannt.

In DE-9 018 059 U1 wird beispielsweise ein System zur Speicherung, Bereitstellung und Aktualisierung von festen und/oder variablen Patienten- und Behandlungsdaten beschrieben, bei dem eine stationäre Computer-Zentraleinheit mit Speichereinheit vorgesehen ist, in der in einer Patientenkartei vorhandene Patientendaten in Form von Datensätzen speicherbar sind. Um patientenspezifische Daten mit Hilfe von Magnetstreifen und/oder Chipkarten leichter eingeben zu können, ist der Computer-Zentraleinheit eine mobile Einheit zugeordnet, die eine zur Daten-Schnittstelle der Computer-Zentraleinheit kompatible Datenschnittstelle enthält. Die mobile Einheit enthält ferner eine von einer Prozessoreinheit kontrollierte Sub-Speichereinheit zur Speicherung von patientenspezifischen Daten und zumindest eine der Sub-Speicherheit zugeordnete Leseeinheit für den Magnetstreifen und/oder die Chipkarte. Weiterhin weist sie zwei Ausgänge auf. Der eine dient zur Anzeige von gespeicherten und/oder eingegebenen patientenspezifischen Daten, der andere dient dazu, die Daten von der mobilen Einheit auf die Computer-Zentraleinheit übertragen zu können.

Mit diesem System können auf einer Krankenversicherungskarte gespeicherte Daten auf einfache Weise in der mobilen Einheit gespeichert und anschließend in der Praxis über die Daten-Schnittstelle in die stationäre Computer-Zentraleinheit eingelesen werden. Der praktische Nutzen liegt im wesentlichen darin, daß beispielsweise bei Hausbesuchen ermittelte Befunde vor Ort dokumentiert und dann in der Praxis auf die stationäre Computer-Zentraleinheit übertragen werden können.

Eine zahnärztliche Praxis umfaßt in der Regel außer einem Verwaltungssystem eine Vielzahl von Diagnose- und/oder Therapie-Geräten, die unterschiedliche Funktionen zu erfüllen haben. Bekannterweise werden Zahnbehandlungen, insbesondere Zahnpräparationen, am eigentlichen Behandlungsplatz (Patientenstuhl mit Behandlungsunit) durchgeführt. Diagnostische Arbeiten werden zum Teil mit Hilfe von (Intraoral- oder Panorama-)Röntgengeräten durchgeführt. Prothetik- und Prophylaxearbeiten werden zum Teil mit extern des Behandlungsplatzes stationierten Geräten durchgeführt.

Der Behandler braucht die zum Teil dezentral erzeugten Informationen aber meist zentral am Behandlungsplatz bzw. an dem Ort, an dem er gerade das Gespräch mit dem Patienten sucht und dann die Diagnose bzw. Therapie durchführen will. Diesem Bedürfnis kann bisher nur dadurch Rechnung getragen werden, daß die oben erwähnten Geräte durch kommerziell verfügbare Netzwerke miteinander verknüpft werden.

Der im Anspruch 1 angegebenen Erfindung liegt die Aufgabe zugrunde, demgegenüber eine Verbesserung zu erzielen. Insbesondere soll eine kostengünstigere, eine relativ aufwendige, Netzwerkverknüpfung vermeidende und zugleich flexiblere Lösung geschaffen werden, mit der es möglich ist, die in der Praxis vorhandenen Diagnose- und/oder Therapiegeräte, unter Berücksichtigung der patientenspezifischen oder der während einer Behandlung erhobenen Befundungs- oder Einstelldaten, leichter bedienen zu können.

Die Erfindung basiert auf der Erkenntnis, daß die zur Diagnose, Therapie oder Verwaltung eingesetzten Daten stets in Verbindung mit dem Patienten erhoben oder erzeugt werden. Gemäß der Erfindung sind diese Daten stets dort verfügbar, wo sie gerade gebraucht werden.

In einer vorteilhaften Ausgestaltung der Erfindung beinhaltet das erfindungsgemäße Gerät einen LCD-Display, diverse Speicher, ein programmierbares Bedienfeld, eine Schnittstelle zur Kommunikation mit dem betreffenden Diagnose- bzw. Therapiegerät an das es adaptierbar ist, die notwendige Steuerelektronik sowie ein oder mehrere, vorzugsweise wiederaufladbare Batterien zur Energieversorgung.

Gemäß einer weiteren vorteilhaften Ausgestaltung kann das erfindungsgemäße Gerät mit einem Mikrofon und/oder mit Mitteln zur drahtlosen Datenübertragung ausgestattet sein. Das Gerät kann ferner mit einer Vorrichtung in Form eines elektronischen Stiftes kombiniert sein, der die Eingabe handschriftlicher Notizen ermöglicht oder die Auswahl von Elementen aus normierten Eingabemasken zuläßt.

Mit Hilfe einer geeigneten Schnittstelle kann das erfindungsgemäße Gerät an jedes beliebige Dentalgerät, das zur Diagnose und/oder Therapie dient, angekoppelt werden. Es ist so möglich, daß ein Dentalgerät das Bedienfeld und das Display des mobilen Datenübertragungsgerätes nutzt. Mit Hilfe eines Übertragungsprotokolls können nach einer Verbindungsaufnahme entsprechende Eingabemasken aus dem jeweiligen Dentalgerät übertragen werden.

Darüber hinaus kann das mobile Gerät mit Vorteil zur Wiedergabe von Musik oder Videofilmen eingesetzt werden, die zuvor in digitalisierter Form über das Patientenverwaltungssystem in das Gerät eingespeist wurden. Weiter kann es mit Vorteil als Bedieneinheit für Computerspiele eingesetzt werden, wobei die entsprechenden Programme ebenfalls aus Patientenverwaltungssystem überspielt werden.

Nachfolgend wird ein Ausführungsbeispiel des erfindungsgemäßen Gerätes und dessen Möglichkeiten in Verbindung mit verschiedenen Dentalgeräten näher beschrieben.

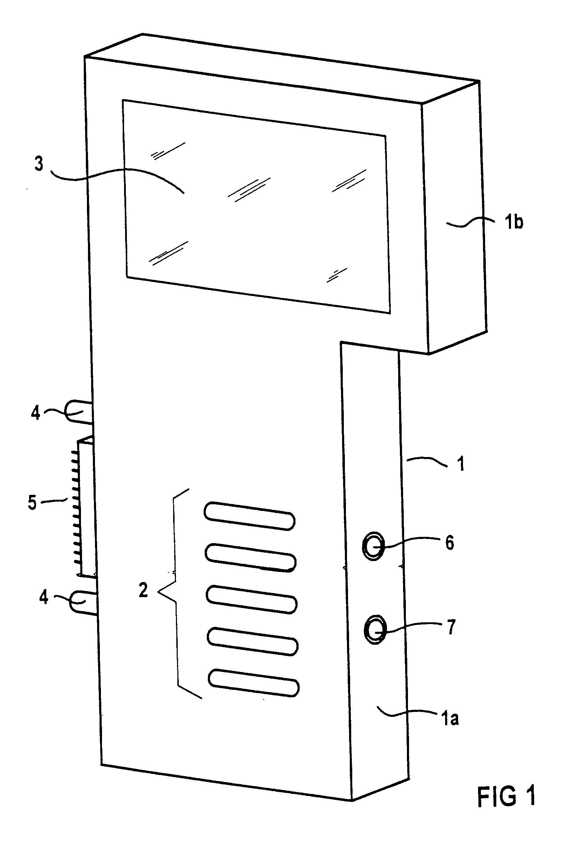

Die Figur 1 zeigt in einer schaubildlichen Darstellung eine Ausführungsform des erfindungsgemäßen mobilen Gerätes. Das allgemein mit 1 bezeichnete Gerät enthält einen unteren Gehäuseabschnitt 1a mit diversen Bedienelementen 2 und einen oberen Gehäuseabschnitt 1b mit einem Display 3. Der untere Gehäuseabschnitt 1a ist so dimensioniert, daß er mit der Hand eines Bedieners umgriffen werden kann. Das Display 3 ist vorzugsweise ein LCD-Display.

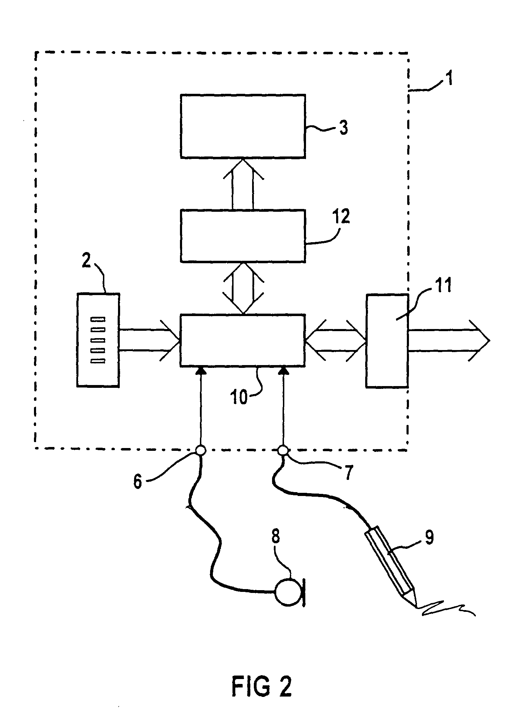

Auf der einen schmalen Seite des unteren Gehäuseabschnitts 1a befinden sich mechanische und elektrische Adaptionsmittel 4, 5 zur Ankoppelung an ein Dentalgerät. Die Adaptionsmittel 4, 5 können als voneinander getrennt angeordnete Adaptionsmittel oder auch als eine kombinierte Adaptereinheit ausgeführt sein. Auf der rechten Seite des Gehäuseabschnittes 1a sind zwei Anschlußbuchsen 6, 7 vorgesehen, an die einerseits ein Mikrofon 8 und andererseits ein elektronischer Griffel 9 angeschlossen werden kann, wie dies aus dem Blockschaltbild nach Figur 2 ersichtlich ist.

Unter Bezugnahme auf Figur 2 ist erkennbar, daß das zentrale Element für die Verarbeitung und Steuerung ein- und ausgehender Daten ein Mikrocontroller 10 ist, der mit einer Schnittstelle 11 und einem Speicher 12 verbunden ist. Die Schnittstelle 11 ist so ausgeführt, daß sie mit dem betreffenden Dentalgerät, an welches das Gerät 1 zur Aufnahme und Übermittlung von Daten adaptierbar ist, kommunizieren kann. Die mechanische und elektrische Verbindung erfolgt, wie bereits erwähnt, über die Kontaktleiste 5.

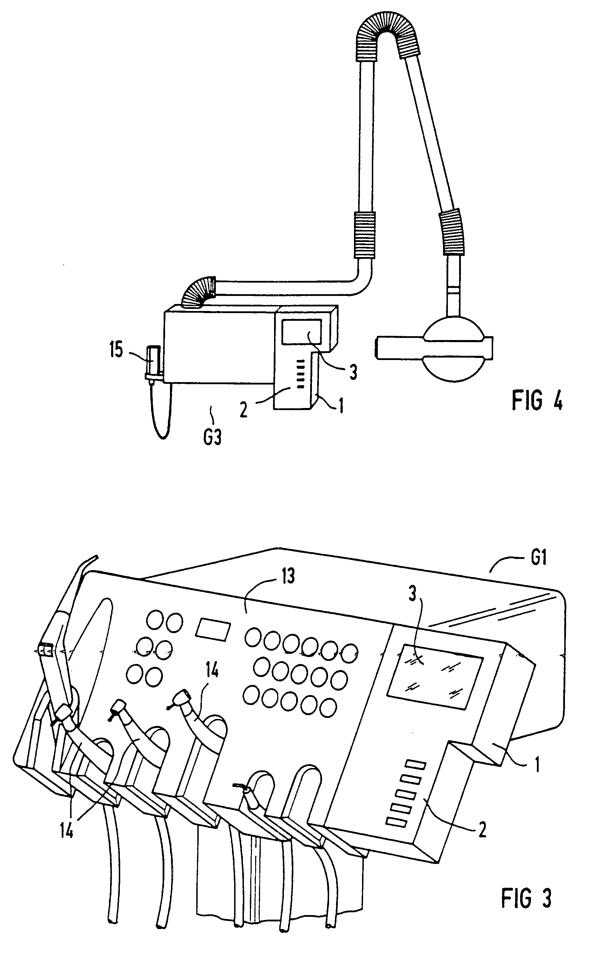

Die Figur 3 zeigt in einer schaubildlichen Darstellung das in Figur 1 dargestellte Gerät 1, angekoppelt an ein Dentalgerät zur Zahnbehandlung, insbesondere zur Zahnpräparation, eines Patienten. Durch die interaktive Verknüpfung über die Schnittstelle 11 mit der Elektronik des Dentalgerätes 13 kann das LCD-Display 3 auch zur Anzeige diverser Daten des Dentalgerätes genutzt werden, z.B. zur Anzeige bestimmter Betriebsparameter oder Diagnoseergebnisse. Beispielsweise kann das Display 3 zur Anzeige der Drehzahl der hier nicht näher erläuterten Dentalinstrumente 14 dienen. Die Figur 4 zeigt eine Anordnung, bei der das erfindungsgemäße Gerät an ein Röntgengerät zur Erstellung von intraoralen Röntgenaufnahmen angekoppelt ist.

Die Steuerelektronik kann dabei so ausgeführt sein, daß mit der Ankoppelung des erfindungsgemäßen Gerätes an das Röntgengerät von diesem ein Steuerprogramm zur Steuerung des Bedienfeldes 2 des Gerätes übertragen wird. Damit entsteht aus dem mobilen Gerät in Verbindung mit dem Dental-Röntgengerät, der dazugehörigen Steuereinheit und einem vorhandenen elektronischen Sensor (15) praktisch ein komplettes Röntgengerät, wobei das mobile Gerät zur Steuerung und Anzeige der ein- und ausgehenden Daten dient. Die Röntgenaufnahme kann so vorteilhafterweise vom mobilen Gerät aus ausgelöst werden, wobei das Röntgengerät über die Schnittstelle 11 das Ergebnisbild an den im mobilen Gerät enthaltenen Rechner 10 überträgt. Vorteilhaft kann es auch sein, das mobile Gerät an die Fernsteuereinrichtung eines Röntgengerätes anzudocken. Das Display 3 kann zusätzlich zur Überprüfung der Aufnahmequalität eines Röntgenbildes eingesetzt werden.

Weitere Anwendungen sind denkbar in Verbindung mit einem Panorama-Röntgengerät oder einem bildgebenden System. Das Bedienfeld des mobilen Gerätes kann außerdem auch dazu benutzt werden, z.B.eine Kamerabeleuchtung an- und abzuschalten oder Videoaufnahmen auszulösen. Auch hier werden die Befehle über die Schnittstelle 11 ausgegeben.

Als weitere Anwendungen kommen Meßsysteme in Frage, mit denen beispielsweise Eigenschaften des Kausystems von einem Patienten, oder mit dem bakterielle chemische oder elektrische Eigenschaften, die zu Diagnose- oder Therapiezwecken bestimmt werden müssen, ermittelt werden können. Das mobile Gerät dient dabei als Steuer- und Anzeigegerät und kann als Datenträger Verwendung finden.

Eine weitere Einsatzmöglichkeit ist in Verbindung mit Dentalgeräten zur Herstellung von Paßkörpern aus Industriekeramik oder anderen schleif- oder fräsbaren Materialien zu sehen.

Die Schnittstelle 11, die zwischen dem erfindungsgemäßen Gerät und einem der vorgenannten Dentalgeräte, an das es angekoppelt werden kann, vorgesehen ist, kann, wie bereits erwähnt, auch drahtlos ausgeführt sein. In diesem Fall besitzt das mobile Gerät ein Auswahlmenü, über das der Anwender festlegen kann, mit welchem Gerät die tragbare Einheit in Verbindung treten soll. Dieses Menü kann bereits zusammen mit den relevanten Behandlungsdaten aus dem Praxisverwaltungssystem übermittelt werden. Die drahtlose Verbindung kann entweder über eine zentrale Vermittlungsstation erfolgen; die Verbindungsaufnahme kann auch direkt geschehen.

Die zentrale Vermittlung hätte die Aufgabe, dann, wenn mehrere Geräte eingesetzt sind, nachzuhalten, welche der genannten Geräte gerade in Benutzung sind. Sobald festgestellt wird, daß eine der mobilen Stationen mit einem bereits belegten Gerät in Verbindung treten möchte, würde sie dies der mobilen Einheit mitteilen.

Bei direkter Verbindungsaufnahme besitzen die mobilen Geräte mindestens zwei Übertragungsmodi. Der Basis-Mode dient der Verbindungsaufnahme und dem Austausch von Merkmalen, wie Speichergröße, Bildformat od.dgl. Dieser Mode ist allen Systemen gemeinsam. Auf der Grundlage, der im Basis-Mode ausgetauschten Informationen entscheidet das Dentalgerät, ob eine Verbindungsaufnahme möglich ist und mit welchen Übertragungsverfahren gearbeitet wird. Diese Information wird der mobilen Station übermittelt. Danach schalten beide Sende- und Empfangseinrichtungen auf den vereinbarten Arbeitsmode um und verriegeln den Basis-Mode, so daß keine andere mobile Station die Verbindung zu diesem Dentalgerät aufnehmen kann. Nach Beendigung dieser Übertragung fallen beide Geräte wieder in den Basis-Mode. Dies kann durch Absenden eines entsprechenden Befehls aus dem Protokoll, welches zu der Schnittstelle gehört, geschehen. Der Befehl kann nur von der Station gegeben werden, die gerade sendet. Die Schnittstelle kann gängige Betriebsspannungen, wie +5V- oder +12V-Spannungen, vorhalten. Die Betriebsspannungen werden zum Aufladen einer vorzugsweise im mobilen Gerät angeordneten Batterie und zum Betrieb von zusätzlichen Einrichtungen, wie Video-Imaging, verwendet, die im mobilen Gerät integriert werden könnten.

Bei der Kommunikation zwischen einem der angeführten Dentalgeräte und dem mobilen Gerät fallen originär sowohl digitale als auch analoge Informationen an. Wird die Kommunikation zwischen den Dentalgeräten und dem mobilen Gerät mittels Steckverbindung realisiert, enthält die Schnittstelle zusätzliche Kanäle, über die digitale Informationen, vorzugsweise in paralleler Form, übertragen werden. Die Übertragung ist vorteilhafterweise dadurch gekennzeichnet, daß mit der eigentlichen Information Signale übertragen werden, die festlegen, wann ein übertragenes Datum gültig ist. Die analogen Daten werden vorzugsweise von dem Dentalgerät digitalisiert und dann entsprechend übertragen. Die Schnittstelle kann auch Kanäle vorsehen, mit denen analoge Informationen übertragen werden können. Dies kann wiederum in Verbindung mit Signalen geschehen, die festlegen, wann ein übertragenes Datum gültig ist. Wird eine drahtlose Form der Übertragung gewählt, können diese Informationen dem gewählten Medium aufgeprägt werden.

Zu der Schnittstelle im erfindungsgemäßen Gerät wird ein Übertragungsprotokoll definiert. Dieses Protokoll besteht aus einem oder mehreren Befehlen, den zu übertragenden Daten und einem Quittierungssignal. Die Befehle können gesendet oder empfangen werden. Die Reaktion des Gerätes auf bestimmte Befehle kann dem Dentalgerät aus dem Praxisverwaltungssystem heraus eingeprägt werden.

Mit Hilfe der Befehle kann das mobile Gerät in einen Grundzustand versetzt werden; es kann sich unter anderem bei dem Dentalgerät an- und abmelden, seine Kennzeichen übermitteln, eine Verbindung herstellen, Codes oder Dateien übertragen.

Des weiteren kann das mobile Gerät über derartige Befehle dazu aufgefordert werden, Steuerinformationen zu installieren oder zu aktivieren und Daten ein- oder auszugeben.

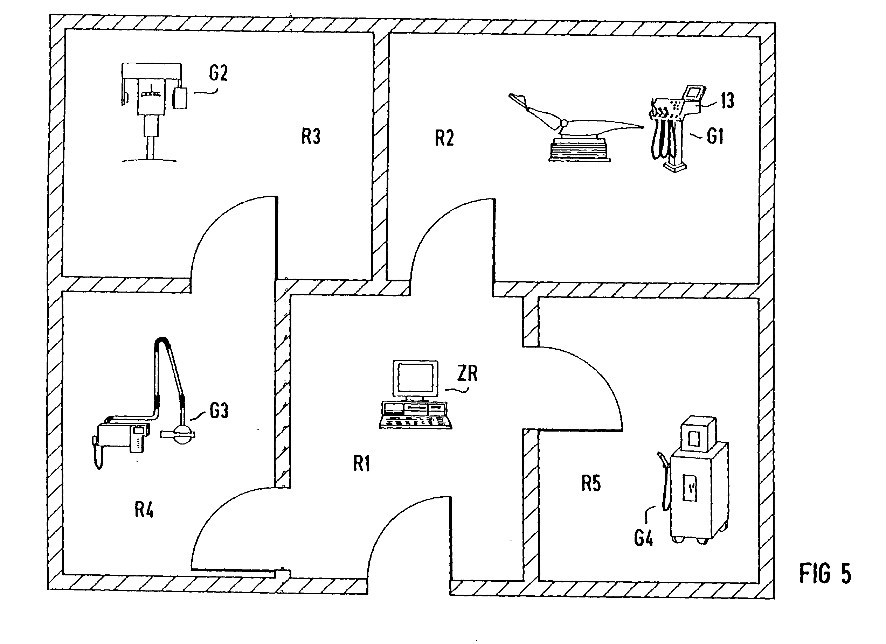

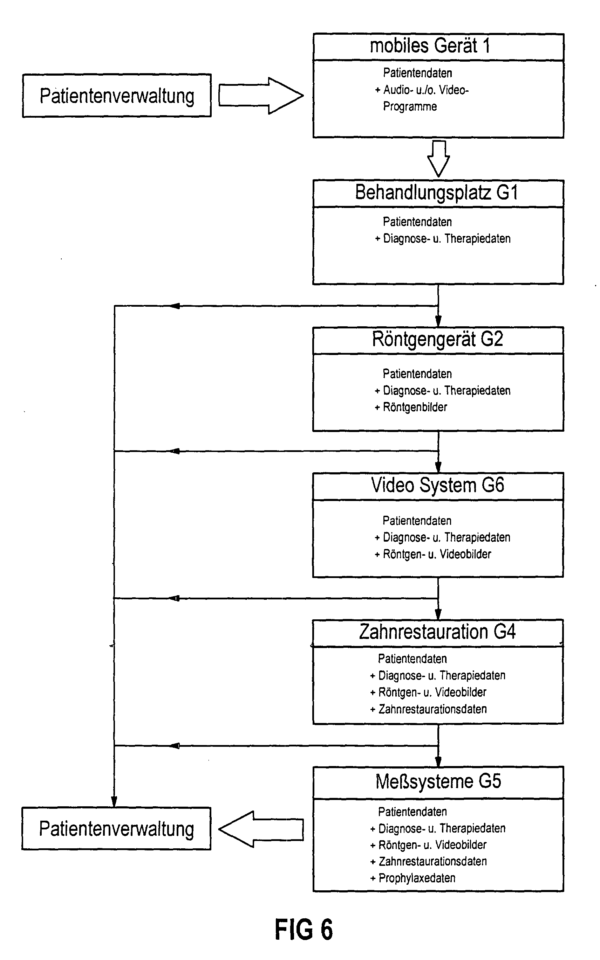

Anhand der Fig.5 und eines in Fig.6 dargestellten Flußdiagrammes werden verschiedene Möglichkeiten aufgezeigt, wie man das erfindungsgemäße Gerät einsetzen kann.

Die Figur 5.zeigt in schematisierter Form eine zahnärztliche Praxis mit fünf Räumen R1 bis R5. Im Empfangsraum R1 ist ein Zentralrechner ZR installiert. Im Raum 2 befindet sich der eigentliche Behandlungsplatz mit einem Behandlungsgerät G1, beispielsweise wie in Fig. 3 dargestellt. Im Raum R3 befindet sich ein Röntgengerät G2 zur Erstellung von Panorama-Röntgen-Aufnahmen. Der Raum R4 enthält beispielsweise das in Figur 4 bereits dargestellte Röntgengerät G3, mit dem sich intraorale Röntgen-Aufnahmen erstellen lassen. Im Raum R5 befindet sich ein Gerät G4 zur Erstellung von Prothetik-Paßkörpern.

Sobald sich ein Patient in der Praxis am Empfang, also extern des Behandlungsplatzes anmeldet, wird ihm ein elektronisches Gerät der eingangs beschriebenen Art (Fig. 1) ausgehändigt. In dieses mobile Gerät werden zuvor aus der zentralen Patientenverwaltungsdatei des Zentralrechners ZR im Raum die speziellen Patientendaten eingegeben. Hierzu wird das Gerät in der vorerwähnten Weise mit dem Zentralrechner (ZR) gekoppelt. Die relevanten Daten, die zur geplanten Behandlung oder für den Behandlungsablauf notwendig sind, werden mit Hilfe der dafür vorgesehenen Eingabemittel (Bedienelemente 2) eingegeben und im Speicher 10 des mobilen Gerätes abgespeichert.

Als Daten können insbesondere Behandlungspläne, Therapievorschläge, Bilddaten und Meßergebnisse, aber auch Parameter zur Steuerung des Arbeitsplatzes bzw. einzelner Instrumente am Arbeitsplatz, in Frage kommen. Die eingegebenen Informationen werden standardisiert abgelegt und nach Koppelung mit dem Dentalgerät, wie in Figur 3 beispielsweise gezeigt, auf das betreffende Dentalgerät übertragen. Wie bereits erwähnt, geschieht dies über die Schnittstelle 10 und den Adapter 5.

Mit diesen in den Speicher des mobilen Gerätes eingelesenen Daten können dann an den verschiedenen Geräten G1 bis G4 diverse Diagnosen und Therapien durchgeführt werden.

Aus dem Zentralrechner ZR (oder einem anderen geeigneten Speicher) können auch Audio- und/oder Videoprogramme in das mobile Gerät eingespielt werden. Diese eingelesenen Programme kann der Patient vor und/oder während einer Behandlung oder auch in Behandlungspausen abspielen. Die Behandlung bzw. mögliche Wartezeiten lassen sich so für den Patienten kurzweiliger gestalten. Die Programme können bevorzugt Musikprogramme, bei Behandlung von Kindern Videospielprogramme sein.

Wie aus dem Flußdiagramm nach Figur 6 hervorgeht, können weitere Untersuchungsgeräte G5 und G6 zum Einsatz kommen, z.B. bildgebende Systeme oder Meßwerterfassungssysteme, die über entsprechende Sensoren Daten zur Prophylaxe, Diagnose oder Therapie erheben. Das Gerät G6 kann beispielswseise ein Video-System sein, mit dem sich Videobilder erstellen lassen. Das Gerät G5 kann ein Meßsystem sein, mit dem bestimmte Prophylaxedaten (beispielsweise über das Kauverhalten des Patienten) aufgenommen und in die zentrale Patientenverwaltung übertragen werden können.

Am Ende der Behandlung werden alle während der Behandlung neu erzeugten Daten aus dem mobilen Gerät wieder in das Praxisverwaltungssystem rückübertragen. Eventuelle Spracheingaben, die über das Mikrofon 8 eingegeben werden, werden sodann in eine textliche Darstellung übersetzt. Der Behandlungsplan für den Patienten wird somit aktualisiert und ist für den nächsten Behandlungstermin vorbereitet.

Bei der im Ausführungsbeispiel nach Figur 3 gezeigten Anordnung wird über die elektrische Steckverbindung mit Hilfe des Adapters 5 eine Verbindung mit dem Zentralrechner im Arbeitsgerät 13 (G1) hergestellt. Vorteilhafterweise wird die Aufnahme von dem mobilen Gerät iniziiert. Hierzu wird diejenige Ausprägung des Kommunikationsprotokolls verwendet, die von allen, in einer Behandlungspraxis in Frage kommenden Dentalgeräten unterstützt wird. Bei dem Aufbau dieser Kommunikationsstrecke gibt das mobile Gerät in standardisierter Form auf Anfrage oder auch unmittelbar Merkmale des Gerätes, wie Speichergröße, Bildformate oder Übertragungsmerkmale bekannt. Anhand dieser Merkmale muß das iniziierte Gerät, im Ausführungsbeispiel das Gerät 13, entscheiden, ob eine Verbindungsaufnahme möglich ist. Das Ergebnis dieser Entscheidung wird dem rufenden Gerät über die Kommunikationsstrecke mitgeteilt. Wenn eine Kommunikation zustande kommt, wird gleichzeitig vereinbart, mit welchen Übertragungsmerkmalen die Verbindung aufgenommen wird. Diese kann dem Anwender z.B. über das Display 13 rückgekoppelt werden. Das Praxisverwaltungssystem hat die in dem mobilen Gerät aufgezeichneten Informationen mit Hilfe eines standardisierten Inhaltsverzeichnisses strukturiert. Dieses Inhaltsverzeichnis kann bei der Iniziierung an das Behandlungsgerät übertragen werden. Die Daten können komplett oder auch sukzessiv ausgelesen und auf einem Display dargestellt werden, wobei alternativ das Display 3 des mobilen Gerätes oder auch ein dem Dentalgerät zugeordnetes eigenes Display zur Darstellung der Informationen genutzt werden kann. Aufgrund der gespeicherten Daten können sodann nach der Iniziierung die für die geplante Behandlung günstigen Einstellwerte, z.B. Betriebsparameter für Instrumente oder Patientenlagerungspositionen, vorbereitet werden.

Mit Hilfe des Eingabegriffels 9 können handschriftliche Notizen, z.B. Befunde, geplante Therapien oder durchgeführte Behandlungen eingegeben werden. Entsprechendes gilt für das Mikrofon 8, welches mit einem entsprechend ausgebildeten Spracherkennungs- und/oder Aufzeichnungssystem ausgestattet ist. Denkbar ist es, eine künstliche Sprache mit bestimmtem Wortschatz zu definieren, der auf die Belange des Zahnarztes abgestimmt ist.

Wenn die Behandlung an dem einen Dentalgerät unterbrochen wird und zwischenzeitlich an einem anderen Dentalgerät eine Diagnose fortgesetzt werden muß, z.B. eine Röntgenaufnahme erstellt werden muß, so wird das mobile elektronische Gerät vom Dentalgerät 13 abgenommen und an das andere Gerät, an dem die Diagnose durchgeführt werden soll, entsprechend adaptiert.

Ist die Behandlung beendet, so wird das mobile Gerät an der Rezeption abgegeben. Dort wird das Gerät über die Schnittstelle wiederum mit dem zentralen Patientenverwaltungssystem (ZR) verbunden. Alle neu erstellten Daten werden ausgelesen und in das elektronische Verwaltungssystem übergeführt.

## Patentansprüche

1. In der zahnärztlichen Praxis einsetzbares mobiles Gerät zur Aufnahme und Übermittlung von Daten aus einer zentralen Patientendatenverwaltungsdatei (ZR) in ein zahnärztliches Diagnose- und/oder Therapiegerät (G1 bis G6) und vice versa, enthaltend ein Bedienfeld (2) mit Mitteln zur Eingabe von Daten, eine Elektronik (10, 12) zur Verarbeitung und Speicherung eingehender Daten und eine Schnittstelle (11) zur Kommunikation mit dem Diagnose- und/oder Therapiegerät (G1 bis G6), an welches die Daten zu übertragen sind und ein Display (3), **dadurch gekennzeichnet, daß** die Elektronik einen Mikrocontroller (10) und eine Schnittstelle (11) umfaßt, die so ausgeführt sind, daß bei Ankoppelung an das Diagnose- und/oder Therapiegerät (G1 bis G6) dessen Steuerprogramm übernommen wird, so daß eine Steuerung des Diagnose- und/oder Therapiegerätes (G1 bis G6) über das Bedienfeld (2) und eine Anzeige der Steuerdaten über das Display (3) des Datenübertragungsgerätes (1) erfolgt.

2. Gerät nach Anspruch 1, enthaltend Mittel zur Aufnahme und Wiedergabe von Audio- und/oder Videoprogrammen.

3. Gerät nach Anspruch 1, enthaltend Mittel zur Adaption an ein zahnärztliches Röntgengerät (G3) zur Erstellung von intraoralen Röntgenaufnahmen mit Hilfe eines strahlenempfindlichen Sensors (15), wobei das Display (3) zur Überprüfung der Aufnahmequalität der erzeugten Bilder herangezogen wird, indem die Bildsignale über die Schnittstelle (11) und den Mikrocontroller (10) geleitet werden.

4. Gerät nach Anspruch 1, enthaltend ein Steuerprogramm mit einem Auswahlmenü für eines von mehreren auszuwählenden Diagnose- und/oder Therapiegeräten (G1 bis G6).

5. Gerät nach einem der Ansprüche 1 bis 4, ausgebildet als tragbares Handgerät.

6. Gerät nach Anspruch 1, enthaltend einen Eingang für den Anschluß eines Mikrofons (8) für eine Dateneingabe.

7. Gerät nach Anspruch 1, enthaltend einen Eingang für den Anschluß eines elektronischen Stiftes (9) zur Dateneingabe.

8. Gerät nach Anspruch 1, enthaltend eine integriert angeordnete Stromversorgung.

9. Gerät nach Anspruch 1, enthaltend Mittel zur drahtlosen Datenübertragung.

10. Gerät nach Anspruch 1, enthaltend Mittel (4, 5) zur Adaption an eine Fernbedienungseinrichtung für ein Röntgengerät (G2, G3).

11. Gerät nach Anspruch 1, enthaltend Mittel zur Spracheingabe und Spracherkennung mit Übersetzung der Sprache in einen Steuer- und/oder Textmodus.

12. Gerät nach Anspruch 11, enthaltend Mittel für eine Eingabe der Daten in einer künstlichen Sprache.

## Claims

1. Mobile appliance which can be used in dental practice for recording and transferring data from a central patient data management file (ZR) to a dental diagnosis and/or therapy appliance (G1 to G6) and vice versa, containing a control panel (2) with means for inputting data, electronics (10, 12) for processing and storing incoming data and an interface (11) for communicating with the diagnosis and/or therapy appliance (G1 to G6) to which the data are to be transmitted, and a display (3), **characterized in that** the electronics comprise a microcontroller (10) and an interface (11) which are designed such that, when coupled to the diagnosis and/or therapy appliance (G1 to G6), the control program thereof is transferred, so that the diagnosis and/or therapy appliance (G1 to G6) is controlled using the control panel (2), and the control data are displayed via the display (3) of the data transmission appliance (1).

2. Appliance according to Claim 1, containing means for recording and playing back audio and/or video programs.

3. Appliance according to Claim 1, containing means for adaptation to a dental X-ray appliance (G3) for producing intraoral X-ray pictures using a radiosensitive sensor (15), the display (3) being used for checking the picture quality of the images produced, by virtue of the image signals being routed via the interface (11) and the microcontroller (10).

4. Appliance according to Claim 1, containing a control program having a selection menu for one of a plurality of diagnosis and/or therapy appliances (G1 to G6) to be selected.

5. Appliance according to one of Claims 1 to 4, in the form of a portable hand-held appliance.

6. Appliance according to Claim 1, containing an input for connecting a microphone (8) for data input.

7. Appliance according to Claim 1, containing an input for connecting an electronic pin (9) for data input.

8. Appliance according to Claim 1, containing a power supply arranged in integrated form.

9. Appliance according to Claim 1, containing means for wireless data transmission.

10. Appliance according to Claim 1, containing means (4, 5) for adaptation to a remote control device for an X-ray appliance (G2, G3).

11. Appliance according to Claim 1, containing means for voice input and voice recognition with translation of the speech into a control and/or text mode.

12. Appliance according to Claim 11, containing means for inputting the data in an artificial language.

## Revendications

1. Appareil mobile utilisable dans un cabinet dentaire afin d'enregistrer et de transmettre des données d'un fichier central (ZR) d'administration des données d'un patient vers un appareil de diagnostic et/ou de traitement dentaire (G1 à G6) et vice-versa, comprenant une zone de commande (2) avec des moyens pour entrer des données, une électronique (10, 12) pour traiter et enregistrer les données entrantes et une interface (11) pour communiquer avec l'appareil de diagnostic et/ou de traitement dentaire (G1 à G6) auquel les données doivent être transmises, et un écran (3), ***caractérisé en ce que*** l'électronique comprend un microcontrôleur (10) et une interface (11), qui sont réalisés de telle manière qu'en cas de couplage avec l'appareil de diagnostic et/ou de traitement dentaire (G1 à G6), son programme de commande est repris, de sorte qu'une commande de l'appareil de diagnostic et/ou de traitement dentaire (G1 à G6) s'effectue par l'intermédiaire de la zone de commande (2) et un affichage des données de commande s'effectue par l'intermédiaire de l'écran (3) de l'appareil de transmission de données (1).

2. Appareil selon la Revendication 1, contenant des moyens d'enregistrement et de restitution de programmes audio et/ou vidéo.

3. Appareil selon la Revendication 1, contenant des moyens d'adaptation à un appareil radiographique dentaire (G3) afin de générer des images radiographiques intra-orales à l'aide d'un capteur (15) sensible au rayonnement, l'écran (3) étant mis à profit pour vérifier la qualité des images produites en envoyant les signaux d'image sur l'interface (11) et le microcontrôleur (10).

4. Appareil selon la Revendication 1, contenant un programme de commande avec un menu de sélection pour un de plusieurs appareils de diagnostic et/ou de traitement dentaire (G1 à G6) au choix.

5. Appareil selon l'une quelconque des Revendications 1 à 4, conformé en appareil portatif.

6. Appareil selon la Revendication 1, contenant une entrée pour le raccordement d'un microphone (8) en vue d'entrer des données.

7. Appareil selon la Revendication 1, contenant une entrée pour le raccordement d'un crayon électronique (9) en vue d'entrée des données.

8. Appareil selon la Revendication 1, contenant une alimentation électrique intégrée.

9. Appareil selon la Revendication 1, contenant des moyens de transmission des données sans fil.

10. Appareil selon la Revendication 1, contenant des moyens (4, 5) d'adaptation à un dispositif de commande à distance pour un appareil de radiographie (G2, G3).

11. Appareil selon la Revendication 1, contenant des moyens de saisie vocale et de reconnaissance vocale avec traduction de la langue en un mode de commande et/ou de texte.

12. Appareil selon la Revendication 11, contenant des moyens pour entrer des données dans un langage artificiel.
